(19) Europäisches Patentamt
European Patent Office
Office européen des brevets

(11) Publication number: **0 651 003 A1**

# (12) EUROPEAN PATENT APPLICATION

(21) Application number: **94103426.6**

(22) Date of filing: **07.03.94**

(51) Int. Cl.$^6$: **C08J 5/08**, C08L 23/12, C08K 3/04, B60R 19/03

(30) Priority: **29.10.93 US 144847**

(43) Date of publication of application: **03.05.95 Bulletin 95/18**

(84) Designated Contracting States: **AT BE CH DE DK ES FR GB IT LI NL PT SE**

(71) Applicant: **AZDEL, INC.**
**925 Washburn Switch Road**
**Shelby,**
**North Carolina 28150 (US)**

(72) Inventor: **van de Grampel, Hendrik Theodorus**
**Koepeldwarsstraat 1**
**NL-4611 JV Bergen Op Zoom (NL)**
Inventor: **Swisher, Robert Gregory**
**172 Gordon Avenue**
**Pittsburgh,**
**Pennsylvania 15218 (US)**
Inventor: **Hou, Yongsheng**
**908 Oakside Lane**
**Pittsburgh,**
**Pennsylvania 15229 (US)**
Inventor: **Thimons, Thomas Vincent**
**2874 Grandview Drive**
**Allison Park,**
**Pennsylvania 15101 (US)**
Inventor: **Spencer, Dennis Odell**
**3042 Longwood Drive**
**Shelby,**
**North Carolina 28152 (US)**

(74) Representative: **Schoppe, Fritz, Dipl.-Ing.**
**Patentanwalt,**
**Georg-Kalb-Strasse 9**
**D-82049 Pullach (DE)**

## (54) Fiber reinforced functionalized polyolefin composites.

(57) A composite material consisting of continuous random glassmats with a new non-peroxide sizing chemistry, polypropylene and a functionalized polypropylene. This composite gives unexpectedly higher performance in bumper beam applications. The functionalized polypropylene contains anhydride functionalities, which are preferably maleic anhydride.

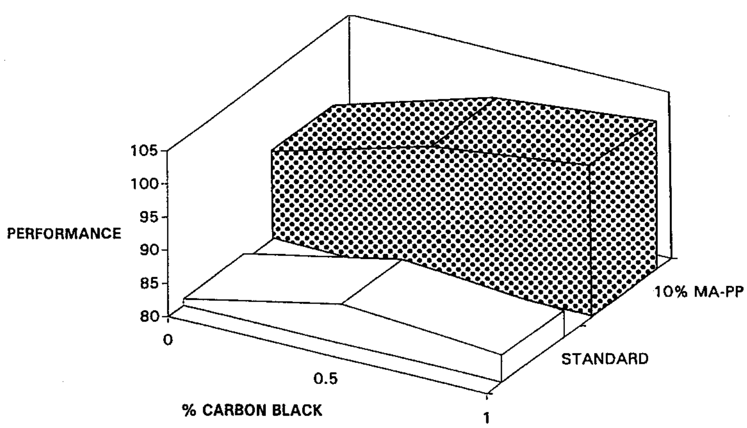


**FIGURE 1**

EP 0 651 003 A1

## FIELD OF THE INVENTION

The present invention relates to composite materials made from a polyolefin or polyolefins which have been chemically modified and reinforcing fibers which are laminated, not extruded, into a composite material.

## BACKGROUND OF THE INVENTION

Polypropylene is a popular thermoplastic resin because it is lightweight, yet stiff, resistant to chemicals and heat, and can withstand repeated flexing. Equally important, polypropylene is less expensive than many other thermoplastics. As manufacturers look to new materials, polypropylene remains a front runner in thermoplastic applications. To improve strength, polypropylene has been reinforced with glass fibers. In automotive applications, polypropylene has been used for fan shrouds and battery cases. But, as government mandated fuel economy standards become more stringent, auto makers are looking for ways to reduce weight while simultaneously increasing the crash worthiness of their vehicles. One way companies are meeting the government and consumer mandates is by using polypropylene to replace metal and other plastics in automotive interiors and exteriors. This strategy has helped reduce both weight and cost while actually improving the recyclability of the vehicle.

Although polypropylene is known for its low cost and light weight, it has lagged behind metal and other plastic materials in terms of strength. While reinforcement with glass fibers can dramatically increase the strength and stiffness of polypropylene, its use in certain areas has been limited. Researchers have sought ways to further improve the properties of reinforced polypropylene. Despite glass fibers being an excellent source of reinforcement, a major drawback is attributed to the lack of interaction between the polar surfaces of the glass fibers with the non-polar polypropylene. The result is a very weak filler/polymer interface. After analyzing failures in composites of polypropylene and glass, it has been determined that the site of the failure is this weak interface. To combat this problem manufacturers have treated glass fibers, shortly after they are formed, with a composition, often called a size, which provides lubricating and protective properties to the fibers, and assists in providing strength and other properties to the reinforced polymers and the products made therefrom. These sizing agents help to hold the glass bundles and reduce surface polarity of the glass.

One area where reinforced polypropylene has not done as well as other plastics is in the area of automotive bumper beams. Traditionally, automotive bumpers have been made of metal, and until the low speed impact requirements were passed into law for the 1974 model year most bumpers were made of metal. Once the new standards were passed, manufacturers started looking for ways to meet these new requirements. An attractive alternative proved to be bumpers made of plastic. These new bumpers offered good protection from damage as well as having reduced weight and improved corrosion resistance.

Automotive manufacturers sought improved bumper material which is strong, light and can retain its shape even when large units are molded. Thermoplastics in the polyolefin family are a favorite with molders, especially polypropylene. However, when molded into a large piece such as a bumper beam or a fascia, polypropylene is not sufficiently stiff to withstand a 5 mph impact from a vehicle. Although polypropylene can be reinforced with glass fibers to improve its performance, even when reinforced, polypropylene falls short of meeting impact requirements demanded by auto manufacturers.

## DESCRIPTION OF THE PRIOR ART

Applicants are aware of the following U. S. Patents and publications concerning composite materials that include polyolefins, chemically modified polyolefins and reinforcing fibers.

| US Pat. No. | Inventor | Issue Date | Title |
|---|---|---|---|
| 4,407,423 | Iwanami | 11-3-87 | PROCESS FOR PRODUCING MOLDED ARTICLE COMPRISING HYDROTALCITE, EVOH, AND OLEFIN RESIN |
| 4,755,575 | Domeier | 7-5-88 | PROCESS FOR PREPARING FIBER REINFORCED MOLDED ARTICLES |
| 4,882,229 | Hwo | 11-21-89 | BLENDS OF HIGH MOLECULAR WEIGHT POLYBUTYLENE WITH LOW DENSITY POLYPROPYLENE |
| 4,943,607 | Tanisake | 7-24-90 | FIBER-REINFORCED UNSATURATED POLYESTER |
| 5,002,830 | Gillis | 3-26-91 | FIBROUS REINFORCED MATERIALS IMPREGNATED WITH LOW VISCOSITY POLYURETHANES/UREA FORMING COMPONENTS |
| 5,165,990 | Nakano | 11-24-92 | STAMPABLE SHEET |
| 5,219,913 | Tomomatsu | 6-15-93 | POLYPROPYLENE-BASED RESIN COMPOSITION |

| PAPERS | |
|---|---|
| Title | Author |
| CHEMICAL COUPLING OF GLASS-FILLED POLYPROPYLENE USING ACID OR ANHYDRIDE MODIFIED POLYPROPYLENES | R. C. Constable A. M. Adur |
| PERFORMANCE ENHANCEMENT IN GLASS FIBER REINFORCED POLYPROPYLENE OBTAINED BY THE ADDITION OF ACRYLIC ACID GRAFTED POLYPROPYLENE | Ashok M. Adur Robert C. Constable Joseph A. Humenik |
| POLYPROPYLENE | Gail Elber |

Iwanami, US Patent 4,704,423, teaches a process for producing a molded article comprising a mixture of an olefin resin, which includes: a residual chlorine due to a Zeigler type catalyst; a hydrolyzed ethylene-vinyl acetate copolymer and a hydrotalcite compound. This patent does not teach the use of glass fiber, polypropylene or functionalized polypropylene.

Domeier, US Patent 4,755,575, teaches an improved process for the rapid fabrication of fiber reinforced thermoset resin articles having improved mold release characteristics and curable molding compositions. While this patent teaches the use of fibers include fiberglass, it does not discuss a glass mat application. This patent mentions the use of anhydrides specifically maleic and phthalic anhydrides, however, their use is connected with polyester and not polypropylene. A careful reading of this patent shows that it is dealing with reaction injection molding which differs substantially from the remolding of the composite plaques used in the present invention. No reference to polypropylene is made.

Hwo, US Patent 4,882,229 teaches a heat sealable wrapping or packing film which is capable of forming a peelable seal. This patent is quite different from the invented process and the only note of interest would be the use of maleic anhydride to modify polyethylene. The present invention uses a modified polypropylene.

Tanisake, US Patent 4,943,607 teaches a fiber reinforced unsaturated polyester resin composite which, when processed, provides good molding. While this patent indicates that polypropylene can be used, a polyethylene is preferable. The reinforcing fiber can be a glass fiber and even a glass mat. No mention is made in this patent of the use a functionalized polypropylene resin.

Gillis, US Patent 5,002,830 deals with a reaction injection molding process which mentions the use of acid anhydrides as well as fibrous reinforcing material such as glass.

Nakano, US Patent 5,165,990 teaches a stampable sheet composition made from a styrene polymer and fibrous reinforcing material. This patent alludes to the use of a maleic anhydride modified polypropylene and the use of polypropylene in conjunction with glass fiber fed into a hot press is disclosed. Additionally glass fibers which are oriented parallel to one another, in one direction is disclosed were glass fibers had previously been defined to include sheet or mat preparation. Powder fillers are discussed, one of these being carbon black. While a number of individual points are mentioned there is no reference concerning the combination of these specific features into one composite or even that such a composite might be desirable.

Tomomatsu, US Patent 5,219,913 teaches a composition of polypropylene and talc powder and that this material is ideally suitable for an automotive bumper beam. It is noted that the polyolefins can be modified with maleic anhydride or acrylic acid. Further organic fillers other than talc, such as glass fibers can also be used. However the combination of polypropylene and talc, is specified as the preferred combination.

Constable and Adur in their article entitled CHEMICAL COUPLING OF GLASS-FILLED POLYPROPYLENE USING ACID OR ANHYDRIDE MODIFIED POLYPROPYLENES describe a composite produced by injection molding polypropylene, short chopped glass fibers and anhydride modified polypropylene. This heated extrusion process produces more intimate contact between the glass fibers and the thermal plastic. It does not discuss laminates and a continuous glass mat would be impossible to extrude.

Adur, Constable and Humenik in their article entitled PERFORMANCE ENHANCEMENT IN GLASS FIBER REINFORCED POLYPROPYLENE OBTAINED BY THE ADDITION OF ACRYLIC ACID GRAFTED POLYPROPYLENE describe a composite produced by injection molding polypropylene, short chopped glass fibers and a chemically modified polyolefin, an acrylic acid modified polypropylene. The heated extrusion process described in this article achieves a more intimate contact between the glass fibers and the thermal plastic. This article does not discuss laminates and a continuous glass mat would be impossible to extrude.

Elber gives some basic information about polypropylene in an article entitled POLYPROPYLENE. This reference's bearing on the invention only deals with some background basics of one of the compositions components.

## SUMMARY OF THE INVENTION

The invention provides a composition of material that can be used for an automotive bumper beams, automotive seat backing or other formed parts. In its basic form, the composite is a glass mat with a functionalized polyolefin. The preferred composite includes polyolefin, functionalized polyolefin and a glass fiber mat or chopped glass fibers of at least a half inch in length.

## OBJECTS OF THE INVENTION

The principal object of the invention is to provide an improved composite glass fiber and polyolefin sheet material.

A further object of this invention is to provide a composite material where the glass filaments don't have to be wetted out.

Another object of the invention is to provide a composite material which has superior dynamic strength.

Another object of the invention is to provide a composite material with superior strength which can be produced economically.

## BRIEF DESCRIPTION OF THE DRAWINGS

The foregoing and other objects will become more readily apparent by referring to the following detailed description and appended drawings in which:

Figure 1 is a graph that shows the increase in performance of carbon black over a composite without carbon black using polypropylene and a glass mat with and without functionalized polypropylene;

Figure 2 is a graphical depiction of the increase in performance of a composite using both the functionalized polypropylene and new sizing over a control material using standard polypropylene and existing sizing technology.

## DETAILED DESCRIPTION

The present invention relates to composites made from continuous random glassmats with polypropylene in conjunction with a functionalized polypropylene. Continuous random glassmats are prepared with fiberglass having a uniform fiber size (e.g. K or T). The fiberglass in the mat has been previously treated with a non-peroxide sizing.

The preferred aqueous size compositions for application to glass fibers for use in the invention contain, as essential components, a reaction product of a polymeric amine and an amine-reactable organosilane, a film-forming polymer and an emulsified polyolefin. The reaction product can be preformed or made <u>in situ</u>, and is preferably the product of a polyalkylene polyamine and epoxy-functional alkoxysilane.

The reaction product can be obtained from a wide variety of polymeric amines and organosilanes, provided the polymeric amine contains at least two and preferably three or more reactive amine groups, normally free primary or secondary amine groups, and the organosilane contains at least one amine-reactable group.

The preferred polymeric amines are those of the formula

$$H_2N\text{-}(C_nH_{2n}NH)_x\text{-}H$$

where n is 2 to 6 and x is 2 to 28, preferably 2 to 6. Such polyalkyleneamines include diethylenetriamine, triethylenetetramine, tetraethylenepentamine, pentaethylenehexamine, dipropylenetriamine, tripropylenetetramine, tetrapropylenepentamine, pentapropylenehexamine, and dihexamethylenetriamine. Mixtures of these are also suitable and in many cases the polyalkyleneamine is chain-extended in the manner discussed below.

Among other polymeric amines which can be usefully employed in the reaction product are polyamines containing fatty acid moieties, polyamine-polyamides, acylated polyamines and other amidoamine polymers, condensation products of polyalkylamines with polyfunctional acids, and polyalkyleneimines.

The polymeric amine component may also be chain-extended variations of the foregoing, such as those produced by reacting the polyamine with difunctional materials which are reactive with amine groups to provide predominantly linear compounds of increased molecular weight. Compounds containing carboxyl, ester, epoxy, isocyanates, halo or other moieties reactive with amine groups, and especially diesters, diepoxies and diacids, can be used in this manner to effect chain extension.

A specific preferred polyamine is tetraethylenepentamine chain-extended with diethyl succinate and octanoic acid to a molecular weight of about 1500, sold as "Alubraspin 230" by PPG Industries, Inc.

The organosilane which is reacted with the polymeric amine to form the reaction product used herein is most commonly an epoxy-functional alkoxysilane, i.e. a silane having at least one epoxy-functional organic moiety and up to three alkoxy groups. The hydrolysis product of the alkoxysilane, in which the alkoxy groups are at least partially hydrolyzed to hydroxyl groups, can also be used and is often preferred, although the hydrolysis is best carried out just prior to the reaction with the polymeric amine. While alkoxy (or hydroxy) substituted silanes are readily available and are preferred, any organosilane that has at least one amine-reactable group, i.e. a group which reacts with the amine groups of the polymeric amine, can be used. The amine reactable group is preferably an epoxy group, but compounds containing amine-reactable keto groups, isocyanato groups, ester groups, alkylhalo groups, acryloxy groups, and the like, may also be employed.

The preferred class of organosilanes herein can be represented by the formula

$$R_n\text{-}Si(OR^1)4\text{-}n$$

where R is the amine-reactable group, $R^1$ is alkyl (preferably lower alkyl), or hydrogen (in the case of a hydrolysis product), and n is preferably one but may be 2 or 3. Some specific useful organosilanes are:

gamma-glycidoxymethyltrimethoxysilane
delta-glycidoxybutyltrimethoxysilane
3,4-epoxycyclohexylethyltrimethoxysilane
3-(isocyanato)propyltriethoxysilane
gamma-isocyanatopropyltriethoxysilane
gamma-methacryloxypropyltrimethoxysilane
gamma-acryloxypropyltriethoxysilane.

The proportions of polymeric amine and organosilane used to make the reaction product are usually from 0.1 to 25 moles of silane per mole of polymeric amine; preferably, the ratio provides for about one mole of organosilane per 1500 number average molecular weight of polymeric amine.

The reaction product can be preformed by mixing the polymeric amine and organosilane, with heating if desired to increase the rate of reaction. A solvent is not necessary unless the viscosity of the reactants is excessive, in which case an alcohol or water can be added. Alternatively, and usually preferably, the reaction product can be formed in situ, i.e. by including polymeric amine and organosilane in the treating composition. In this case, they react during the formulation and/or during application of the composition to the fibers and the subsequent drying.

The second component of the composition is a water-dispersible film-forming polymer. Film formers have been conventionally used in sizes for glass fibers; for example, starch-oil sizes are well known for application to glass fibers for textile use (i.e. for use in woven fabric or cloth). In the present invention,

starch is not utilized as a film former.

The film-forming polymer component herein is water-dispersible and thus the polymer itself is usually of relatively low molecular weight (by the term "water-dispersible" is meant soluble or emulsifiable in water). A wide variety of water-dispersible film-forming polymers are known and can be used. The preferred polymers are epoxies, by which is meant compounds or mixtures of compounds having more than 1.0 epoxy groups per molecule. These include polyglycidyl ethers of polyphenols, such as bisphenol A, or of polyhydric alcohols; cycloaliphatic polyepoxides; polymers containing pendent epoxy groups, such as polyglycidyl acrylate; and the like. The preferred epoxies are commercially available products, particularly polyglycidyl ethers of bisphenol A, these often have been modified to provide additional functionality, as by reaction with urethanes to include isocyanato groups. The specific preferred film forming polymer is the epoxy resin sold by Rhone-Poulenc as Epi-Rez W60 5520, which is a modified epoxy resin dispersion in water (56% solids). The epoxy resin is understood to be a urethane-modified polyglycidyl ether of bisphenol A having an epoxide equivalent of 520.

Also useful as the film-forming polymer are other synthetic polymers made from various monomers and which, when dried or cured, form a surface film. Examples include polyvinyl halide polymers, acrylic polymers, urethanes, alkyds, aminoplasts, vinyl acetate polymers and copolymers, poly(vinylpyrrolidone), polyesters, and the like.

The composition also includes an emulsified polyolefin, i.e., a stable dispersion of polyolefin in water. Preferred is emulsified polypropylene. Emulsions of polyolefins such as polyethylene and polypropylene are available commercially and are employed in the practice of the invention. Preferred emulsions are those of polypropylene which have been modified to introduce polar groups, as for example, by free-radical induced grafting ethylenically unsaturated monomers, such as maleic anhydride or acrylic acid. Usually, the level of such polar groups is quite low, in the rage of 0.01 to 1 percent by weight. For instance, commercially available maleic anhydride-modified polypropylene emulsions usually contain about 0.1 percent by weight of maleic anhydride. A specific preferred polyolefin emulsion is sold by National Starch and Chemical Company as Protolube RL-5440, and is a maleic anhydride modified polypropylene emulsion containing 32 percent solids. Other examples of useful emulsified polyolefins include several products sold by Chemical Corporation of America including those sold as Poly Emulsion 43N40, which is a non-ionic polypropylene emulsion, and Poly Emulsion 43C40, which is a cationic polypropylene emulsion, each of these having about 40 percent solids content.

An optional added component is a water-soluble, non-volatile carboxylic acid. "Non-volatile" is defined as a material which does not substantially volatilize at the conditions at which the composition is made and applied. "Water-soluble" is defined as a soluble in water in the concentration utilized in the composition. Both of these terms being used in the sense conventional in the art. Unsaturated acids, such as maleic acid, are preferred, but others such as benzoic acid, oxalic acid, butyric acid, methacrylic acid and the like can also be employed. The carboxylic acid component, while not critical, is important in achieving the desired level of properties in fabricated products made using the glass fibers treated with these compositions along with thermoplastic polymers such as polypropylene.

While the treating composition usually consists essentially of the foregoing components, other additives can be included. These may include such materials as surfactants and low molecular weight acids, such as acetic acid, used to adjust the pH, which is usually between about 3 and about 9, preferably between about 5 and 6.

Glass fibers treated with the foregoing size composition can be made into mats in accordance with known practice. Such mats, especially continuous strand needled mats, are particularly useful for making the reinforced thermoplastic polyolefin resin sheets of the present invention. These preferred size composition for glass fiber treatment, are more fully described in co-pending application Serial No. ___________, filed the same day herewith.

The functionalized polypropylene is prepared with maleic anhydride. While it is possible to use different materials in the functionalization of polypropylene, maleic anhydride is preferred because its works well and is low in cost. Basically, the functional group incorporated in the polypropylene chain is a 5 membered ring. Position 1 of the ring contains an oxygen atom attached to an carbonyl carbon at position 2 which is attached to two more carbon atoms at positions 3 and 4 and finally to another carbonyl carbon at position 5.

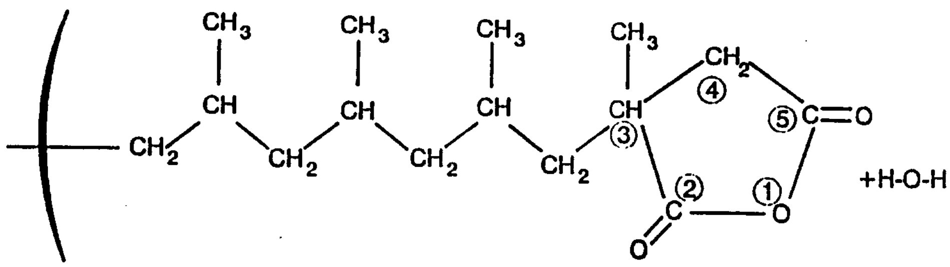

If any water is introduced into this system, it will have the tendency to cleave the ring between the oxygen atom (position 1), and one of the carbonyl carbons (either position 2 or 5). The water molecule will give up a positively charged hydrogen ion which will attach to the now negatively charged oxygen atom at position 1. This will leave the other carbonyl carbon with a positive charge (see position 5). When the water molecule gave up a positive hydrogen proton it left a negatively charged OH ion, which is then attracted to the positive charge on the carbonyl carbon.

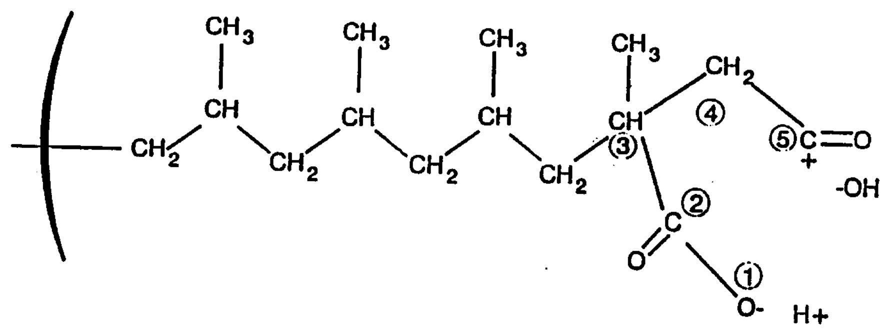

The result is that the ring is split and two carboxyl groups are formed. There is no indication that the anhydride or a compound containing two carboxyl functional groups differ any in performance.

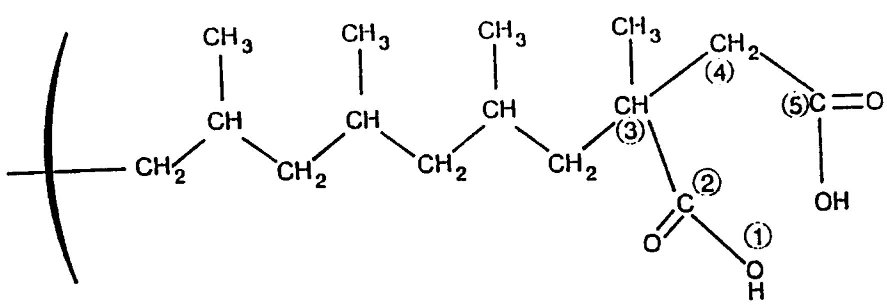

What is important on the functionalized polypropylene is the number of functional groups that are contained in the polypropylene. This is generally measured in a weight/percent manner. Testing has shown that a level of functionalization of at least .02% based on the weight of the entire composite increases the performance of the composition. This level can be increased to 5% on weight. The optimal range is between .02% and .15% based on the final composition. This level can be achieved in two ways. Either add polypropylene with the desired level of functionalization directly to the glass mat, or mix polypropylene with a highly functionalized polypropylene so that the end product will average out to the desired level of functionalization and add the blended mix to the glass mat.

When polypropylene is blended with functionalized polypropylene it is easier to let down a small quantity of functionalized polypropylene into the standard polypropylene. Therefore, a higher degree of functionalization is desirable. It is now common in the industry to have 0.2% to 0.3% functionalized polypropylene. While polypropylene of this level of functionality can be used, it is preferable to use

polypropylene with an anhydride functionality in the 0.8% to 1.6% range. Of importance is that at the 0.8% level of functionality there is no real difference in cost compared to material with a functionality in the 0.2% to 0.3% range. However, to obtain polypropylene with an anhydride functionality of 1.6%, the cost increases. This is generally due, not to the cost of raw materials, but rather to the processing cost involved in achieving the higher anhydride functionality. Further, material having a 1.6% anhydride functionality on the polypropylene is priced as a value added commodity.

The other important factor to consider in the selection of the polypropylene is the melt flow. Polypropylenes possessing a higher melt flow can be molded more easily while reducing energy costs to the purchaser of the material.

After the composite product is produced, it is pre-cut into sheets called blanks. These blanks are preheated to a temperature just above their softening point. This is typically done with infrared heaters in a holding apparatus which is connected to a modified mechanical stamping press. Softened blanks are then charged to an open, cooled matched metal die mounted in the press. The die is then rapidly closed and the press is stopped on the bottom for 5 to 15 seconds to allow for cooling of the laminate, the press is then opened and the part is removed. Relatively complex isotropic parts requiring no trimming can be shaped at very high production rates in one die. This compares favorably with steel stampings which would generally require several "strikes" in multiple dies and presses to stamp a comparable part.

## ALTERNATIVE EMBODIMENTS

While the present invention relates to composites made from continuous random E-glassmats (borosilicates) it is possible to further increase performance of the material by adding in unidirectional reinforcing strands of glass.

The use of Carbon Black has been shown to significantly increase the performance of the composite requiring less functionalized polypropylene be used, see Figure 1. This is a surprising finding. It had been expected that the addition of carbon black, a pigment, would at best cause no change in performance and at worst, result in a drop in performance. In theory, the pigment is dispersed in the polypropylene film, like the glass fibers. This dispersion of pigment in the film gives the composite color. However the pigment is thought to be inert, so that it is only trapped by the composite. While it is possible to use up to 20% or even 30% carbon black in the composite, the preferred range is between 0.01% to 5% carbon black.

While a glassmat, such as E-glassmat, is preferred, it is also possible to use chopped glass fibers of at least a half (1/2) inch in length treated with non-peroxide sizing, more specifically an aqueous composition of a polymeric amine and amine-reactable organosilane, along with a film-forming polymer, an emulsified polyolefin and a non-volatile carboxylic acid as described in co-pending application Serial No. ___________, filed the same day herewith. The combination of these fibers with carbon black, polypropylene and functionalized polypropylene creates a composite material of superior performance.

## EXAMPLES

Material samples were prepared, an E-glassmat and polypropylene composite serving as a control against sample A, a composite of polypropylene, functionalized polypropylene and E-glassmat. When tested for Tensile Strength, Tensile Modulus, Flexural Strength and Flexural Modulus, sample A showed improvements in all areas (see table 1) but Tensile Modulus. What was completely unexpected was the significant increase in performance when tested for impact. The impact tests were run on a Dynatup machine and showed an 83% increase in performance over the control sample which did not use the functionalized polypropylene.

Table 1

| MECHANICAL PROPERTIES | | | | |
|---|---|---|---|---|
| **PROPERTY** | **units** | **CONTROL** | **A** | **% IMPROVEMENT** |
| % GLASS | % | 40 | 40 | |
| TENSILE STRENGTH | ksi | 14.0 | 19.8 | 41 |
| TENSILE MODULUS | ksi | 800 | 800 | -- |
| FLEXURAL STRENGTH | ksi | 24.0 | 29.6 | 23 |
| FLEXURAL MODULUS | ksi | 800 | 900 | 13 |
| IMPACT | ft-lbs | 16.0 | 29.2 | 83 |

A sample plaque was then prepared with carbon black, polypropylene, functionalized polypropylene and E-glassmat, sample B. The expectation was that the addition of carbon black would result in the same or slightly worse performance than the control. However the addition of carbon black actually resulted in an increase in performance of the plaque over both the control and sample A. Sample B showed a 14% improvement in Tensile Modulus and a 8% improvement in Flexural Modulus as shown in Table 2.

Table 2

| EFFECTS of CARBON BLACK | | | | | |
|---|---|---|---|---|---|
| **PROPERTY** | **units** | **CONTROL** | **A** | **B** | **% IMPROVEMENT** |
| TENSILE MODULUS | ksi | 800 | 800 | 914 | 14 |
| FLEXURAL MODULUS | ksi | 800 | 900 | 974 | 8 |
| CARBON BLACK | Y/N | NO | NO | YES | |

Based on this testing Bumper Beams were molded with the control composite and with a composite using maleated polypropylene carbon black and the new sizing chemistry on the glass mat. In all cases the bumpers showed a 20 to 60 percent improvement in static and dynamic 5 mph crash tests.

Table 3

| BUMPER BEAM PERFORMANCE | | | | |
|---|---|---|---|---|
| **Design** | **Test Type** | **Max. Load (lbs.)** | | **% Improvement** |
| | | **Standard** | **MA-PP** | |
| Generic | static | 4,500 | 6,800 | 51 |
| Domestic, Van | static | 8,000 | 9,800 | 23 |
| Domestic, Sedan | static | 13,000 | 15,700 | 21 |
| Foreign, Sedan | static | 5,100 | 6,900 | 35 |
| Domestic, Van | 5 mph. | 21,000 | 33,700 | 60 |
| Domestic, Sports | 5 mph. | 12,200 | 17,300 | 42 |
| MA-PP stands for maleated polypropylene | | | | |

Samples were prepared with and without carbon black, with and without functionalized polypropylene, polypropylene, a 30% glass mat with existing sizing technology and with the new sizing technology. The results are listed in Table 4 below. The addition of the new sizing technology demonstrated an appreciable difference in performance even without the functionalized polypropylene as can be seen by comparing the control with sample H. By removing the carbon black but adding functionalized polypropylene, sample I shows a decrease in all areas compared to sample H which contained carbon black and the new sizing. Though sample I demonstrates improvements over the carbon black control without the sizing. The sample containing carbon black, new sizing and functionalized polypropylene produced improved performance in every area.

Table 4

| 30% GLASS FILLED EXPERIMENT | | | | | |
|---|---|---|---|---|---|
| PROPERTY | units | CONTROL | H | I | J |
| TENSILE STRENGTH | ksi | 12.0 | 12.5 | 12.0 | 13.4 |
| FLEXURAL STRENGTH | ksi | 20 | 23 | 22 | 25 |
| FLEXURAL MODULUS | ksi | 620 | 806 | 747 | 853 |
| CARBON BLACK | Y/N | YES | YES | NO | YES |
| MA-PP | | NO | NO | YES | YES |
| New Sizing | | NO | YES | YES | YES |
| MA-PP stands for maleated polypropylene | | | | | |

Applicants are aware that functionalized polypropylene combined with glass fiber reinforcement are known in the art. However, what has been taught to date is the combination of functionalized polypropylene with short chopped fibers in an injection mold. The use of long chopped fibers, which are defined here to be fibers of at least one half (1/2) inch in length, or a glass mat significantly increases the impact strength of the composite, as can be seen in Table 5.

**Table 5**

| IMPACT STRENGTH (ft lbs/in) | | | |
|---|---|---|---|
| Data for 40% Glass filled polypropylene | | | |
| Short Chopped Continuous Injection Molded | Long Chopped | Continuous Mat | Mat MA-PP New Sizing |
| | ←----------Compression Molded | ---------- | ----------→ |
| 2 | 10 | 14 | 16 |

MA-PP stands for maleated polypropylene

## SUMMARY OF THE ACHIEVEMENT OF THE OBJECTS OF THE INVENTION

From the foregoing, it is readily apparent that we have invented an improved composite material which is especially suited for the production of automotive bumper beams. The combination of continuous random glassmats, with a new non-peroxide sizing chemistry, polypropylene and a functionalized polypropylene contained anhydride functionalities have shown to give unexpectedly higher performance in bumper beam applications.

It is to be understood that the foregoing description and specific embodiments are merely illustrative of the best mode of the invention and the principles thereof, and that various modifications and additions may be made to the apparatus by those skilled in the art, without departing from the spirit and scope of this invention, which is therefore understood to be limited only by the scope of the appended claims.

## Claims

**1.** A glass reinforced resin sheet comprising:
a glass fiber mat; and
a functionalized polyolefin.

**2.** A resin sheet according to claim 1 further comprising a polyolefin.

**3.** A resin sheet according to claim 1 further comprising carbon black.

**4.** A resin sheet according to claim 3 wherein the level of carbon black is between 0.01 to 5.0% by weight of the resin sheet.

**5.** A resin sheet according to claim 1 wherein the functionalized polyolefin is polypropylene.

**6.** A resin sheet according to claim 5 wherein the functionalized polypropylene is functionalized with maleic anhydride.

**7.** A composition of material according to claim 5 wherein the functionalized polypropylene has an anhydride functionality of 0.02 to 5.0% by weight.

**8.** A resin sheet according to claim 1 wherein the glass fibers in the continuous glass mat are treated with a substantially peroxide-free sizing agent.

**9.** A resin sheet according to claim 8 wherein the sizing agent is an aqueous composition of:
a polymeric amine;
a organosilane;
a water-dispersible, film-forming polymer; and
a emulsified polyolefin.

**10.** A resin sheet according to claim 9 wherein the sizing agent further comprises a carboxylic acid.

**11.** A laminated composite comprising:
a glass mat;
a functionalized polyolefin; and
a polyolefin.

**12.** A laminated composite according to claim 11 wherein said polyolefin is polypropylene.

**13.** A laminated composite according to claim 12 wherein the functionalized polypropylene is functionalized with maleic anhydride.

**14.** A laminated composite according to claim 12 wherein the functionalized polypropylene has an anhydride functionality of 0.02 to 5.0% by weight.

**15.** A laminated composite according to claim 14 wherein the glass mat is made from glass fibers treated with a substantially peroxide-free sizing agent.

**16.** A laminated composite according to claim 15 wherein the substantially peroxide-free sizing agent comprises:
a polymeric amine;
a organosilane;
a water-dispersible, film-forming polymer; and
a emulsified polyolefin.

**17.** A laminated composite according to claim 16 wherein the sizing agent further comprises a carboxylic acid.

**18.** A laminated composite according to claim 17 further comprising carbon black.

**19.** A laminated composite according to claim 18 wherein the level of carbon black is between 0.01 to 5.0% by weight of the resin sheet.

**20.** A laminated composite product according to claim 18 wherein the product is a bumper beam.

**21.** A laminated composite according to claim 20 wherein said glassmat contains uni-directional fibers.

**22.** A laminated composite according to claim 21 wherein the percentage of uni-directional fibers contained in said glassmat is from 3 to 100 percent, as a percentage of total fibers.

**23.** A laminated composite comprising: chopped glass fibers of at least 0.5 inch in length;
a functionalized polyolefin;
a polyolefin;
carbon black; and
a substantially peroxide-free sizing agent.

**24.** A laminated composite according to claim 23 wherein said polyolefin is polypropylene.

**25.** A laminated composite according to claim 24 wherein the functionalized polypropylene is functionalized with maleic anhydride.

**26.** A laminated composite according to claim 24 wherein the functionalized polypropylene has an anhydride functionality of 0.02 to 5.0% by weight.

**27.** A laminated composite according to claim 26 wherein the substantially peroxide-free sizing agent comprises:
a polymeric amine;
a organosilane;
a water-dispersible, film-forming polymer; and
a emulsified polyolefin.

**28.** A laminated composite according to claim 27 wherein the sizing agent further comprises a carboxylic acid.

**29.** A laminated composite according to claim 23 wherein the level of carbon black is between 0.01 to 5.0% by weight of the resin sheet.

**30.** A bumper beam molded from a laminated composite comprising:
a glass mat;
a functionalized polyolefin; and
a polyolefin.

**31.** A laminated composite bumper beam according to claim 30 wherein said polyolefin is polypropylene.

**32.** A laminated composite bumper beam according to claim 31 wherein the functionalized polypropylene is functionalized with maleic anhydride.

**33.** A laminated composite bumper beam according to claim 32 wherein the functionalized polypropylene has an anhydride functionality of 0.02 to 5.0% by weight.

**34.** A laminated composite bumper beam according to claim 33 wherein the glass mat is made from glass fibers are treated with a substantially peroxide-free sizing agent.

**35.** A laminated composite bumper beam according to claim 34 wherein the substantially peroxide-free sizing agent comprises:
a polymeric amine;
a organosilane;
a water-dispersible, film-forming polymer; and
a emulsified polyolefin.

**36.** A laminated composite bumper beam according to claim 35 wherein the sizing agent further comprises a carboxylic acid.

**37.** A laminated composite bumper beam according to claim 36 further comprising carbon black.

**38.** A laminated composite according to claim 37 wherein the level of carbon black is between 0.01 to 5.0% by weight of the resin sheet.

**39.** A laminated composite bumper beam according to claim 38 wherein the glassmat has a percentage of uni-directional fibers.

**40.** A laminated composite bumper beam according to claim 39 wherein the percentage of uni-directional fibers is from 3 to 100 percent, as a percentage of total fibers.

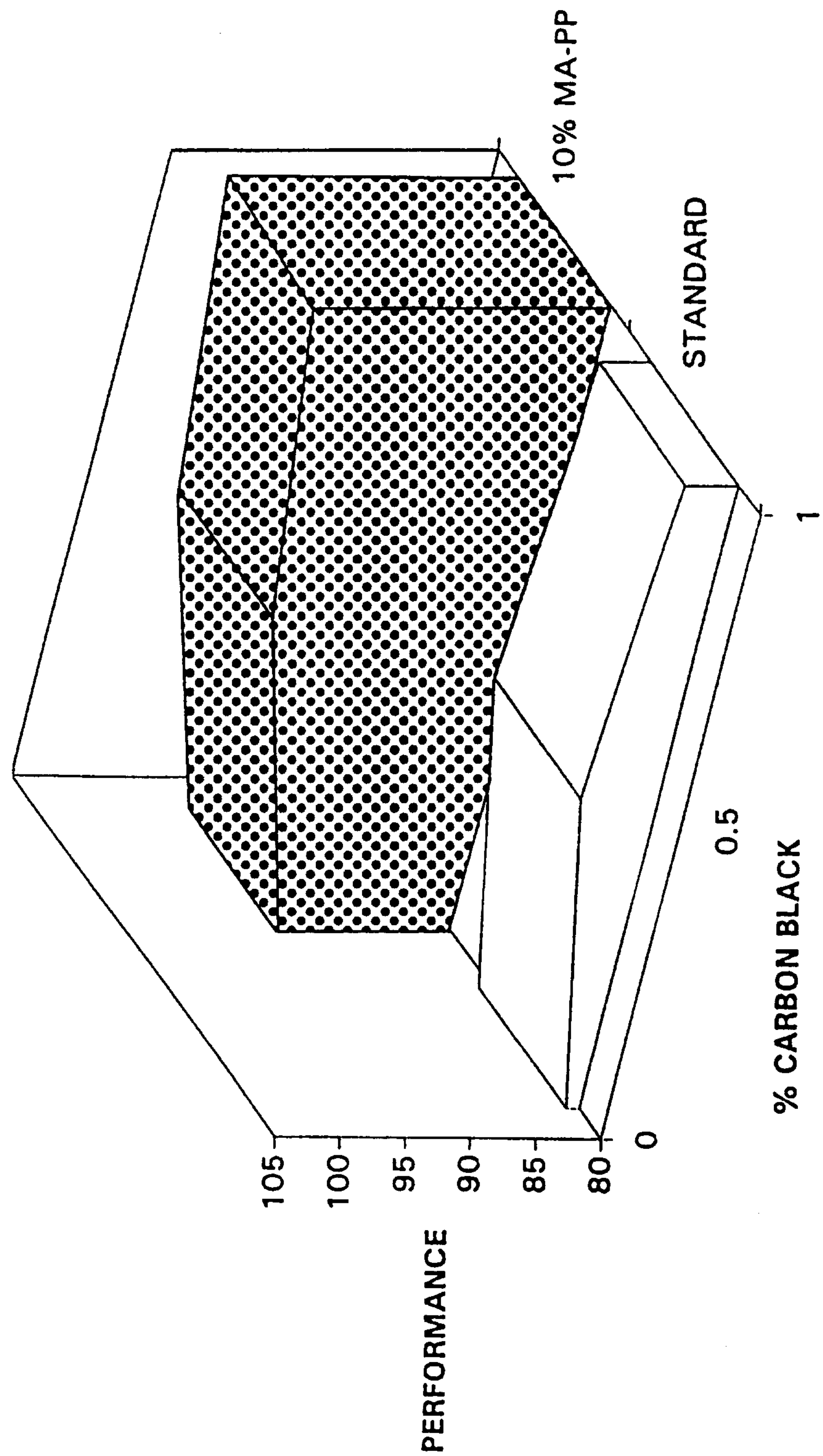
PERFORMANCE
105
100
95
90
85
80
0
0.5
1
% CARBON BLACK
STANDARD
10% MA-PP

FIGURE 1

# PROPERTY COMPRISON

**Standard 40% Glass Filled vs. MA-PP + Sizing**

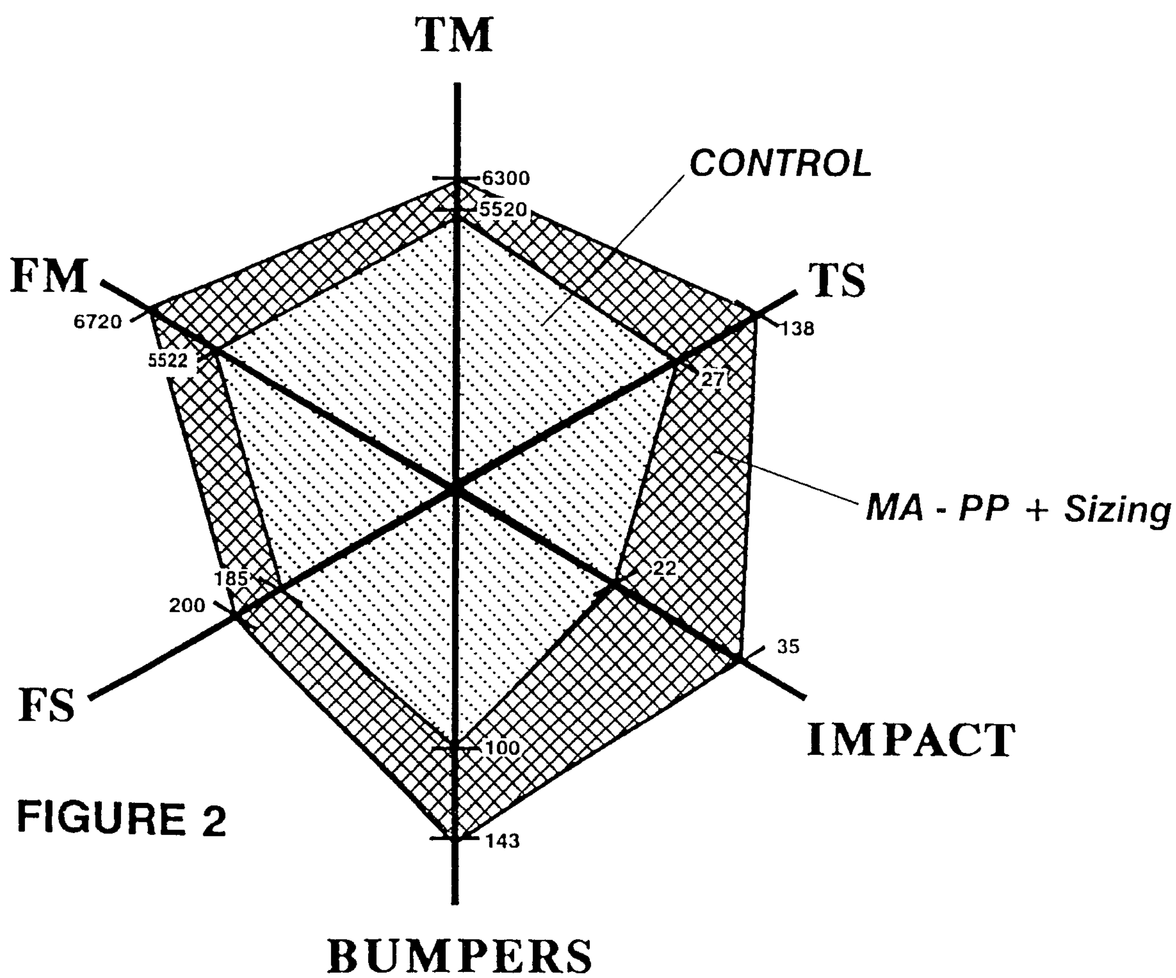


FIGURE 2

European Patent Office

# EUROPEAN SEARCH REPORT

Application Number
EP 94 10 3426

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-3 437 550 (J.T. PAUL, JR.)<br>* claims 1-9,14,23,26 *<br>* column 1, line 14 - line 23 *<br>* examples 1-4 *<br>--- | 1,2,5-8, 11-15, 30-34 | C08J5/08<br>C08L23/12<br>C08K3/04<br>B60R19/03 |
| X | US-A-4 358 501 (C. TEMPLE)<br>* claim 1 *<br>--- | 1,2,5-8, 11-15 | |
| X | EP-A-0 502 414 (IDEMITSU N.S.G. CO., LTD.)<br>* claims 1,2,4,5 *<br>* page 3, line 18 - line 31 *<br>* page 4, line 10 - line 12 *<br>--- | 1,2,5-8, 11-15, 23-26 | |
| X | CHEMICAL ABSTRACTS, vol. 113, no. 16, 15 October 1990, Columbus, Ohio, US; abstract no. 133615, 'FIBER-REINFORCED PROPENE POLYMER COMPOSITIONS CONTAINING GREY PIGMENT'<br>page 60 ;<br>* abstract *<br>& JP-A-02 138 349 (TOYODA GOSEI CO., LTD.)<br>--- | 1-8 | TECHNICAL FIELDS SEARCHED (Int.Cl.6)<br>C08J<br>B60R |
| X | EP-A-0 404 303 (SUMITOMO CHEMICAL COMPANY, LIMITED)<br>* claims 1,8,12,13 *<br>* page 9, line 16 *<br>--- | 1-3,5-8, 30-34 | |
| A | US-A-4 749 613 (T. YAMADA ET AL.)<br>* claims 1,4,9 *<br>----- | 11-22, 30-40 | |

The present search report has been drawn up for all claims

| Place of search | Date of completion of the search | Examiner |
|---|---|---|
| THE HAGUE | 10 February 1995 | Hallemeesch, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document